# FASCICULE DE BREVET EUROPEEN

(11) **EP 2 075 743 B1**
(45) Date de publication et mention de la délivrance du brevet: **30.06.2010**
(21) Numéro de dépôt: 07150450.0
(22) Date de dépôt: 27.12.2007
(51) Int. Cl.: G06K 19/07, G06K 19/073

(54) **Circuit électronique pour répondeur non initialisé à l'enclenchement de la tension d'alimentation**
Elektronischer Schaltkreis für nicht initialisierten Anrufbeantworter bei Einschaltung der Versorgungsspannung
Electronic circuit for an answering machine not started when the input voltage is triggered

(43) Date de publication de la demande: 01.07.2009
(73) Titulaire: EM Microelectronic-Marin SA, 2074 Marin (CH)
(72) Inventeur: Stiglic, Maksimilijan, 2000, Maribor (SI); Randjelovic, Zoran, 2074 Marin (CH)
(74) Mandataire: Surmely, Gérard

(56) Documents cités:
- WO-A-98/48523
- US-A1- 2004 076 250

## Description

La présente invention concerne le domaine des circuits électroniques pour répondeur ou transpondeur sans fonction POR (de l'anglais Power On Reset), c'est-à-dire du type non initialisé à l'enclenchement de la tension d'alimentation. La tension d'alimentation est obtenue par un circuit redresseur du signal électrique fourni par l'antenne du répondeur ou transpondeur.

Un tel répondeur envoie son message dès qu'il reçoit via son antenne une tension d'alimentation suffisante au fonctionnement de son circuit électronique. De plus, comme le répondeur n'est pas initialisé à l'enclenchement de la tension d'alimentation, c'est-à-dire lorsque la tension redressée du signal d'interrogation reçu par le répondeur atteint une valeur suffisante au fonctionnement de ce répondeur, il commence à envoyer un signal de réponse en commençant à une position aléatoire du message contenu dans ce signal de réponse. Il est prévu qu'il répète ce message de sorte que le lecteur reçoit finalement un message complet en identifiant généralement le début d'un message. Un tel protocole de communication nécessite donc une période de communication relativement longue. Cette période de communication peut encore être prolongée par des pauses entre les envois successifs du message, de telles pauses étant généralement prévues dans le cadre d'un protocole d'anti-collision des réponses de plusieurs répondeurs situés dans le champ d'émission d'un même lecteur.

Le fonctionnement du répondeur du type décrit ci-avant engendre des temps de test relativement longs pour les circuits électroniques destinés à former de tels répondeurs. Un tel test est généralement effectué sur une plaquette (en anglais : wafer) comprenant un nombre élevé de circuits électroniques, ces circuits étant testés simultanément.

L'installation de test apporte des aiguilles sur les deux plages de contact de chaque circuit destinées à recevoir les deux extrémités d'une bobine formant antenne. En général, l'installation de test fournit un signal correspondant à celui d'un lecteur et reçoit en retour des signaux de réponse des circuits testés selon le protocole de communication prévu pour les répondeurs. La gestion d'un tel test est relativement complexe pour l'installation de test qui reçoit en parallèle un très grand nombre de messages de réponse envoyés de manière non synchronisée et répétés, dans certains cas, après des pauses de durée variable et parfois aléatoire. Ainsi, le test requiert un certain temps pour être fiable; ce qui augmente le coût de production des circuits électroniques.

WO98/48523 A2 décrit un répondeur de l'art antérieure. La présente invention a pour but de fournir un circuit électronique pour répondeur du type décrit ci-avant, mais agencé de manière à permettre d'effectuer un test fiable et rapide des circuits intégrés dans une plaquette, c'est-à-dire un test en lot d'une pluralité de tels circuits.

A cet effet, l'invention a pour objet un circuit électronique selon la revendication 1.

Selon des variantes particulières, le générateur est formé par un compteur-décompteur ou par un compteur asynchrone fournissant en sortie un signal correspondant à l'état du bit le plus significatif (MSB).

Grâce aux caractéristiques du circuit selon l'invention, le répondeur obtenu après avoir connecté une antenne au circuit électronique fonctionne sans remise à zéro ou initialisation à l'enclenchement de la tension d'alimentation, car le signal électromagnétique reçu d'un lecteur par l'antenne du répondeur est un signal alternatif qui engendre le même nombre d'impulsions dans les deux extracteurs d'un signal d'horloge avec un redresseur à double alternance. Si ce nombre devait dans certaines circonstances ne pas être identique, chaque extracteur recoit au moins régulièrement une impulsion d'horloge. Selon un mode de réalisation mentionné ci-avant, le générateur de signaux de remise à zéro est lui-même remis à zéro ou initialisé dès qu'une impulsion est fournie par un des deux extracteurs donné, de sorte que ce générateur ne fournira jamais un signal de remise à zéro au circuit logique lorsque le répondeur correspondant reçoit un signal d'interrogation quelconque d'un lecteur. La différence d'impulsions des deux signaux d'horloge engendrant une remise à zéro du circuit logique est prévue suffisamment grande, c'est-à-dire supérieure à toute différence possible pouvant survenir dans des cas particuliers, par exemple lorsque le signal d'interrogation est modulé par une variation de la phase ou de la fréquence.

Par contre, le circuit selon l'invention permet d'effectuer une remise à zéro ou une initialisation du circuit logique par une installation de test. En effet, le test étant effectué avec des aiguilles établissant une connexion électrique à contact avec les plages conductrices du circuit prévues pour l'antenne, il est aisé de fournir à ces deux plages des signaux indépendants et d'engendrer ainsi des nombres différents d'impulsions dans les signaux d'horloge fournis par les deux extracteurs d'horloge prévus dans le circuit selon l'invention, lesquels sont respectivement associés à ces deux plages.

Il est en particulier possible lors du test de laisser une des deux plages de contact à un potentiel fixe de manière à engendrer aucune impulsion dans l'extracteur associé à cette plage au moins pendant la phase de remise à zéro des circuits électroniques formant une plaquette testée.

Le circuit selon l'invention permet ainsi d'effectuer un test synchrone de la pluralité des circuits électroniques et de gérer temporellement l'envoi d'un message entier par chaque circuit électronique formant une plaquette testée.

La présente invention sera exposée ci-après à l'aide de la description de modes de réalisation particuliers, faite en référence aux figures annexées, données à titre d'exemples nullement limitatifs, dans lesquelles :
- la figure 1 est une représentation schématique d'un premier mode de réalisation d'un circuit selon l'invention, et
- la figure 2 est une représentation schématique d'un deuxième mode de réalisation de l'invention.

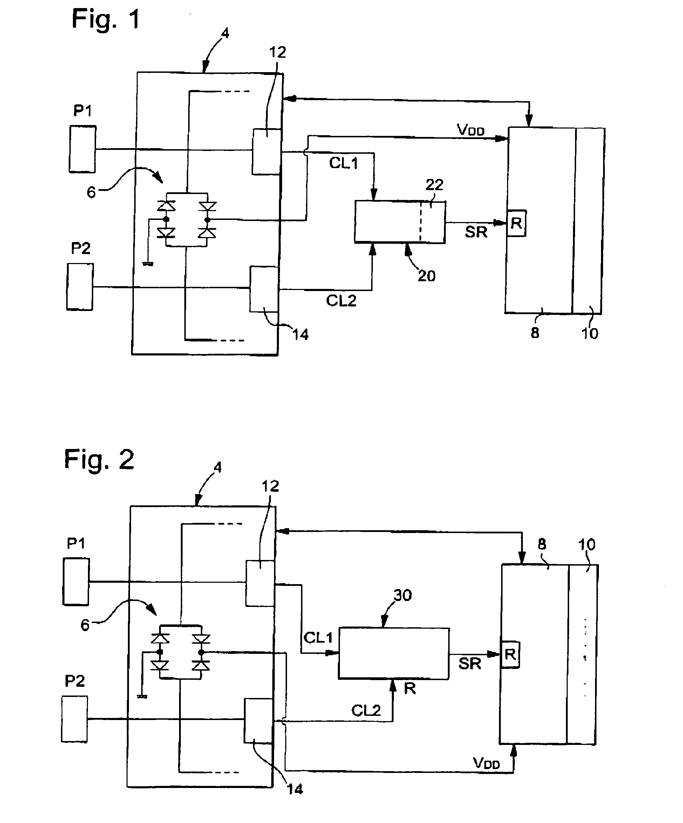

A la figure 1 est représenté schématiquement un premier mode de réalisation d'un circuit électronique destiné à former avec une antenne un répondeur fonctionnant sans remise à zéro à l'enclenchement de la tension d'alimentation. Ce circuit comprend deux plages de contact P1 et P2. Pour obtenir un répondeur, il est prévu de relier électriquement les deux extrémités d'une bobine formant antenne respectivement à ces deux plages de contact. Le circuit comprend une partie avant 4 dans laquelle est agencé notamment un redresseur à double alternance 6, nommé aussi redresseur pleine onde. Ce redresseur fournit la tension d'alimentation V_{DD} au circuit logique 8 du circuit électronique. Ce circuit logique est associé à une mémoire 10 dans laquelle est stocké un message de réponse du répondeur.

Selon l'invention, les deux plages de contact P1 et P2 sont respectivement reliées à des premier et deuxième extracteurs d'horloge 12 et 14 qui fournissent respectivement deux signaux d'horloge CL1 et CL2. Etant donné la construction symétrique avec le redresseur pleine onde, les deux extracteurs d'horloge reçoivent respectivement la première et la seconde alternance d'un signal alternatif engendré dans une bobine-antenne connectée aux deux plages de contact P1 et P2. Ainsi, normalement, le premier signal d'horloge CL1 comprend un nombre d'impulsions identiques au signal d'horloge CL2 lorsque le circuit électronique selon l'invention est relié à une antenne pour former un répondeur. Un extracteur d'horloge fournit un signal digital définissant une succession d'impulsions permettant notamment de cadencer un circuit logique. Une .impulsion est définie par exemple par le passage du niveau bas au niveau haut (flanc montant) ou par le passage inverse (flanc descendant) dans le signal d'horloge engendré par l'extracteur.

Selon l'invention, le circuit électronique comprend en outre un générateur 20 d'un signal de remise à zéro du circuit logique 8. Dans le cas du premier mode de réalisation décrit ici, le générateur 20 est agencé pour fournir le signal de remise à zéro dès que la différence entre le nombre d'impulsions du premier signal d'horloge CL1 et le nombre d'impulsions du deuxième signal d'horloge CL2 est égal ou supérieur à un nombre entier positif prédéfini N1. De préférence et pour des raisons de sécurité d'utilisation, il est prévu que le nombre N1 soit supérieur ou égal à 2, de préférence égal à 4.

Selon une première variante, le générateur 20 comprend deux compteurs associés respectivement aux entrées recevant les signaux CL1 et CL2. Les valeurs respectives de ces deux compteurs sont fournies à une unité logique de soustraction 22, laquelle est agencée pour fournir un signal de remise à zéro SR au circuit logique 8 lorsque le résultat est égal au nombre N1 supérieur à 1. Dans une variante, l'unité de soustraction 22 permet de calculer une différence jusqu'à une valeur maximale supérieure à N1. Lorsque le résultat de soustraction atteint N1, le circuit logique 8 est remis à l'état initial et reste dans cet état jusqu'à ce que ladite valeur maximale soit atteinte. Dès que cette valeur maximale est dépassée, l'état de remise à zéro est débloqué et les deux compteurs du générateur sont remis à zéro.

Dans une autre variante de réalisation, le générateur 20 est formé essentiellement par un compteur-décompteur recevant en entrée les signaux d'horloge CL1 et CL2. Ce compteur-décompteur, nommé aussi compteur réversible, est associé à un circuit logique 22 qui envoie un signal de remise à zéro SR lorsque la valeur du compteur-décompteur atteint la valeur N1.

Le signal de remise à zéro SR peut être formé d'une impulsion envoyée au circuit logique 8 lorsque la valeur N1 est atteinte par le générateur 20. On peut prévoir qu'une telle impulsion soit envoyée chaque fois que l'état du compteur-décompteur correspond à un multiple entier de la valeur donnée N1.

A l'aide de la figure 2, on décrira un deuxième mode de réalisation d'un circuit électronique selon l'invention, lequel est caractérisé en particulier par le fait que le générateur 30 du signal de remise à zéro SR, fourni au circuit logique 8, est agencé pour engendrer un tel signal SR dès que ce générateur 30 reçoit du premier extracteur d'horloge CL1 un nombre entier positif prédéfini N2 d'impulsions sans recevoir d'impulsion du second extracteur 14 du deuxième signal d'horloge CL2.

Les références déjà décrites précédemment ne seront pas décrites à nouveau ici en détail.

Selon une variante préférée, le générateur 30 est formé par un compteur asynchrone qui fournit en sortie un signal correspondant au bit le plus significatif ou de plus grand poids (MSB : Most Significant Bit). Ce signal de sortie sert directement à former le signal de remise à zéro SR.

Le signal d'horloge CL2 fourni par le deuxième extracteur 14 opère une remise à zéro du compteur asynchrone 30. Ainsi, dès que le générateur 30 reçoit une impulsion de l'extracteur d'horloge 14, le compteur asynchrone recommence à compter à partir de zéro. On comprend ainsi que ce circuit connecté à une antenne recevant un signal électromagnétique alternatif ne peut jamais remettre à zéro le circuit logique 8, étant donné que le générateur 30 ne pourra jamais atteindre la valeur prédéfinie N2 puisqu'il reçoit périodiquement, normalement à la deuxième alternance du signal électromagnétique, une impulsion de remise à zéro R. On peut choisir pour N2 une valeur égale à deux, mais par mesure de sécurité, la valeur N2 est de préférence égale à 4, voire 8.

D'autres variantes de réalisation peuvent être envisagées par l'homme du métier sans sortir de l'esprit de la présente invention. On notera en particulier que dans le premier ou le deuxième mode de réalisation, la valeur maximale pouvant être prise par le générateur 20, respectivement 30 peut être égale à la valeur prédéfinie N1, respectivement N2. Le circuit logique 8 est ainsi remis à zéro lorsque le générateur atteint la valeur N1, respectivement N2 et reste dans cet état initial jusqu'à ce qu'un nouveau signal d'horloge CL1 engendre un retour à zéro du générateur, étant donné que la valeur maximale pouvant être prise par le générateur est alors dépassée. Le générateur a un fonctionnement cyclique.

## Revendications

1. Circuit électronique destiné à former avec une antenne un répondeur fonctionnant sans remise à zéro à l'enclenchement de l'alimentation électrique du circuit électronique, ce circuit électronique comprenant des première et deuxième plages de contact (P1 et P2) prévues respectivement pour les deux extrémités de ladite antenne, un premier extracteur (12) d'un premier signal d'horloge (CL1) relié électriquement à la première plage de contact et un circuit logique (8) associé à une mémoire (10),
**caractérisé en ce que** qu'il comprend un second extracteur (14) d'un deuxième signal d'horloge (CL2) relié électriquement à ladite deuxième plage de contact et un générateur (20) d'un signal de remise à zéro (SR) dudit circuit logique relié en entrée aux premier et second extracteurs, et **en ce que** ce générateur est agencé pour fournir ledit signal de remise à zéro audit circuit logique dès que la différence entre le nombre d'impulsions du premier signal d'horloge et le nombre d'impulsion du deuxième signal d'horloge est égal ou supérieur à un nombre entier positif prédéfini.

2. Circuit électronique selon la revendication 1, **caractérisé en ce que** ledit générateur (20) est formé par un compteur réversible.

3. Circuit électronique selon la revendication 1, **caractérisé en ce que** ledit générateur est agencé pour fournir ledit signal de remise à zéro audit circuit logique dès que ce générateur reçoit dudit premier extracteur un nombre entier positif prédéfini d'impulsions sans recevoir durant cette réception une impulsion dudit second extracteur.

4. Circuit électronique selon la revendication 3, **caractérisé en ce que** ledit générateur (30) est formé par un compteur asynchrone fournissant en sortie un signal correspondant à l'état du bit le plus significatif ou de plus grand poids (MSB).

## Claims

1. Electronic circuit intended to form with an antenna a responder that operates without resetting to zero when the power supply of the electronic circuit is switched on, said electronic circuit comprising first and second contact pads (P1 and P2) respectively provided for the two ends of said antenna, a first extractor (12) of a first clock signal (CL1) electrically connected to the first contact pad and a logic circuit (8) associated with a memory (10), **characterised in that** it comprises a second extractor (14) of a second clock signal (CL2) electrically connected to said second contact pad and a generator (20) of a zero reset signal (SR) of said logic circuit connected as input to the first and second extractors, and **in that** this generator is configured to supply said zero reset signal to said logic circuit as soon as the difference between the number of pulses of the first clock signal and the number of pulses of the second clock signal is equal to or greater than a predefined positive integer.

2. Electronic circuit according to claim 1, **characterised in that** said generator (20) is formed by a reversible counter.

3. Electronic circuit according to claim 1, **characterised in that** said generator is configured to supply said zero reset signal to said logic circuit as soon as this generator receives from said first extractor a predefined positive whole number of pulses without receiving a pulse from said second extractor during this reception.

4. Electronic circuit according to claim 3, **characterised in that** said generator (30) is formed by an asynchronous counter, which outputs a signal corresponding to the state of the most significant or highest-order bit (MSB).

## Patentansprüche

1. Elektronische Schaltung, die mittels einer Antenne zur Bildung eines Transponders vorgesehen ist, der bei Einschalten der elektrischen Versorgung der elektrischen Schaltung ohne ein Zurücksetzen auf Null funktioniert, wobei die elektronische Schaltung erste und zweite Kontaktbereiche (P1 und P2) aufweist, die jeweils für zwei Enden der besagten Antenne vorgesehen sind, und wobei ein erster Extraktor (12) eines ersten Zeitsignals (CL1) elektrisch mit dem ersten Kontaktbereich verbunden ist und wobei eine logische Schaltung (8) einem Speicher (10) zugeordnet ist, **dadurch gekennzeichnet, dass** sie einen zweiten Extraktor eines zweiten Zeitsignals (CL2) aufweist, der elektrisch mit dem zweiten Kontaktbereich verbunden ist und wobei ein Generator (20) für ein Resetsignal (SR) der logischen Schaltung eingangs der ersten und zweiten Extraktoren verbunden ist und wobei der Generator dazu ausgebildet ist, das besagte Resetsignal der logischen Schaltung zu erzeugen sobald die Differenz zwischen der Anzahl der Impulse des ersten Zeitsignals und der Anzahl der Impulse des zweiten Zeitsignals gleich oder größer einer vorbestimmten positiven ganzen Zahl ist.

2. Elektronische Schaltung nach Anspruch 1, **dadurch gekennzeichnet, dass** der besagte Generator (20) von einem reversiblen Zählwerk gebildet ist.

3. Elektronische Schaltung nach Anspruch 1, **dadurch gekennzeichnet, dass** der besagte Generator (20) dazu ausgebildet ist, das besagte Resetsignal der logischen Schaltung zu erzeugen sobald der Generator vom ersten Extraktor eine vorbestimmte positive ganze Zahl an Impulsen erhält ohne während dieses Empfangs einen Impuls des zweiten Extraktors zu erhalten.

4. Elektronische Schaltung nach Anspruch 3, **dadurch gekennzeichnet, dass** der besagte Generator (30) von einem asynchronen Zählwerk gebildet ist, um ausgangsseitig ein Signal zu erzeugen, welches dem Zustand des signifikantesten oder des am schwersten gewichteten (MSB) Bit entspricht.
